(19) Europäisches Patentamt

European Patent Office

Office européen des brevets

(11) **EP 4 092 196 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **22173761.2**

(22) Anmeldetag: **17.05.2022**

(51) Internationale Patentklassifikation (IPC):
*E02D 5/03* (2006.01)   *C04B 14/00* (2006.01)
*E02D 5/28* (2006.01)   *E02D 27/42* (2006.01)
*E02D 27/52* (2006.01)   *E21B 33/14* (2006.01)

(52) Gemeinsame Patentklassifikation (CPC):
(C-Sets verfügbar)
**E02D 27/425; C04B 28/04; C04B 28/065;**
**E02D 5/03; E02D 5/28; E02D 27/52;**
C04B 2111/00663; C04B 2111/74   (Forts.)

(54) **GRÜNDUNGSPFAHL UND VERFAHREN ZU SEINER HERSTELLUNG**

FOUNDATION PILE AND METHOD FOR THE PRODUCTION OF SAME

PIEU DE FONDATION ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2021 DE 102021112877**

(43) Veröffentlichungstag der Anmeldung:
**23.11.2022 Patentblatt 2022/47**

(73) Patentinhaber: **RWE Offshore Wind GmbH**
**45141 Essen (DE)**

(72) Erfinder:
• **Bartminn, Daniel**
  **25335 Elmshorn (DE)**
• **Czarnecki, Artur**
  **22301 Hamburg (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A2- 2 851 471       WO-A1-2020/207651
WO-A1-2020/211993

(52) Gemeinsame Patentklassifikation (CPC): (Forts.)

C-Sets
**C04B 28/04, C04B 14/04, C04B 14/06, C04B 14/22,
C04B 14/34, C04B 14/48, C04B 18/14,
C04B 22/062, C04B 22/064, C04B 2103/0051;
C04B 28/065, C04B 7/02, C04B 14/04, C04B 14/06,
C04B 14/22, C04B 14/34, C04B 14/48, C04B 18/14,
C04B 22/062, C04B 22/064, C04B 2103/0051**

**Beschreibung**

Die Erfindung betrifft einen Gründungspfahl zum Einbringen in einen Untergrund, insbesondere für Offshore-Bauwerke. Die Erfindung betrifft ferner ein Verfahren zur Herstellung des erfindungsgemäßen Gründungspfahls sowie die Verwendung des erfindungsgemäßen Gründungspfahls als Gründung für ein Offshore-Bauwerk, insbesondere für eine Offshore-Windkraftanlage.

TECHNISCHER HINTERGRUND

Insbesondere Offshore-Gründungen werden häufig als Pfahlgründungen ausgeführt. Dabei werden üblicherweise in den Meeresgrund ein oder mehrere Gründungspfähle eingebracht. Das Einbringen in den Meeresgrund erfolgt normalerweise mittels Rammen oder Vibrieren. Die Pfähle sind häufig als Hohlpfähle aus Stahl ausgebildet, die über eine vorgegebene Länge in den Meeresuntergrund verbracht werden. Auf diese Pfähle wird eine Unterwasserstruktur beziehungsweise Verankerungsstruktur des Offshore-Bauwerks aufgesetzt. Für die Verankerung werden unter anderem sogenannte Jacket-Fundamente eingesetzt. Das Jacket-Fundament trägt später ein Bauwerk. Ferner können die Stützbeine der auf den Gründungspfählen errichteten Struktur in der Einbaulage von den Gründungspfählen durchsetzt sein. Alternativ können die Stützbeine auch in die Gründungspfähle eintauchen. In beiden Fällen ist es üblich, die Bauelemente im Bereich ihrer gegenseitigen Durchdringung zu vergrouten, das heißt mit einer hydraulisch aushärtbaren Vergussmasse zu verbinden. Als Vergussmasse (grout) finden hochviskose Betone Anwendung, die nach deren Aushärtung Kräfte zwischen den einander umschließenden Teilen der Bauelemente übertragen.

Insbesondere Offshore-Bauwerke wie Windkraftanlagen sind durch Wellen und Windeinwirkung dynamisch zyklischen Lasten ausgesetzt, so dass über die Lebensdauer des Bauwerks Zug- und Druckspannungen in die Vergussmasse eingetragen werden. Mit der Zeit unterliegt der Beton einer gewissen Schwindung, wodurch der Oberflächenkontakt des Betons mit dem Stahl unter Umständen vermindert wird, so dass Zugspannungen im Beton zu einer Rissbildung und zu einer verminderten Materialfestigkeit des Betons führen.

Zum Einbringen eines Gründungspfahls in den Untergrund werden am häufigsten das Rammen und das Vibrieren verwendet. Diese Verfahren haben unterschiedliche Vorund Nachteile. So entsteht beim Einvibrieren eine je nach Porenraum mehr oder minder starke Bodenverdichtung und damit eine Spannungsänderung im Bereich der Kontaktfläche zwischen dem eingebrachten Gründungspfahl und dem Untergrund. Durch Einbringung mittels Vibration wird die über die Kontaktfläche stattfindende Verspannung im Baugrund stark herabgesetzt, womit die Gesamttragfähigkeit der eingebrachten Profile gegenüber einem eingerammten Profil deutlich verringert ist.

Auf der anderen Seite ist das Rammen des Gründungspfahls in den Untergrund an vielen Lokationen aus bautechnischen oder Umweltschutzgründen nicht möglich. So ist das Rammen mit hohen Schallemissionen verbunden, die insbesondere bei Offshore-Bauwerken eine sehr hohe Belastung maritimer Lebewesen verursacht.

Aus dem Stand der Technik sind verschiedene Ansätze bekannt, mit denen Abhilfe verschafft werden soll.

So schlägt die DE 10 2017 121 137 A1 allgemein für Profile, die im Baugrund einvibriert oder eingestellt werden, vor, Material außen auf die Profile aufzubringen, das sein Volumen nach dem Einbringen vergrößert. Die DE 10 2017 121 137 A1 setzt dabei auf quellfähige Materialien wie Quellgummi, Polyurethan und Bentonit(-Matten). Die Lösungen der DE 10 2017 121 137 A1 zielen insbesondere darauf ab, eine Struktur in ein Bohrloch einzubringen, mit dem sich die Struktur über das quellfähige Material durch Wasseraufnahme verspannt. Eine chemische Reaktion der Bestandteile des quellfähigen Materials ist nicht vorgesehen.

Ferner schlägt die EP 2 851 471 A2 vor, als Vergussmasse für zwei einander durchdringende Bauwerksstrukturen wie die oben beschriebenen Stützbein- und Gründungspfahlstrukturen eine Vergussmasse einzusetzen, die nach dem Abbinden eine Volumenzunahme erfährt, die dem Schwinden entgegenwirkt. In der EP 2 851 471 A2 spielt die Alkali-Kieselsäure-Reaktion die ausschlaggebende Rolle für die Volumenvergrößerung der Vergussmasse. Über die Ausdehnung der Vergussmasse verspannen sich die einander durchdringenden Bauwerksstrukturen.

Die Alkali-Kieselsäure-Reaktion ist eine Ausprägung der sogenannten treibenden Angriffe, die eine Form der chemischen Korrosion von Beton und Stahlbeton darstellen, wie in dem Buch "Bauchemie" von Thomas Mallon, Vogel Fachbuch, Kamprath-Reihe, 1. Auflage 2005, Seiten 118 bis 121 beschrieben. Entsprechend gelangt die Vergussmasse nach der Lehre der EP 2 851 471 A2 nicht selbst mit dem Untergrund in Kontakt, da laut der EP 2 851 471 A2 eine Alkali-Kieselsäure-Reaktion bei nicht umschlossenen beziehungsweise eingespannten Betonteilen nicht erwünscht ist und normalerweise zur Zerstörung des betreffenden Bauwerks führt. Lediglich bei zumindest überwiegend von Bauwerksstruktuen eingeschlossenen Vergussmassen sei die Alkali-Kieselsäure-Reaktion im Wesentlichen unschädlich.

Bei dem Stand der Technik nach WO2020 207651 A1 weist ein in den Baugrund eindringendes Ende einer Gründung eine Beschichtung auf, welche durch Einwirkung von Feuchtigkeit oder und/oder Bewegung einen Schmierfilm bildet und nach Wassersättigung aushärtet und/oder expandiert.

Beim Stand der Technik nach WO 2020 211993 A1 weisen Verankerungselemente eines Turms im Meeresboden ein Füllmaterial auf, das eine Zementsuspension aufweist.

Die im Stand der Technik vorgeschlagenen Lösungen weisen verschiedene Nachteile auf. So bringen Quellgummi und Polyurethan nicht biologisch abbaubare Kunststoffe ein, was Bestrebungen auf einen weitgehenden Verzicht von solchen Kunststoffen zuwiderläuft. Ferner weisen Bentonitmatten häufig Schichten auf, die nicht umweltfreundlich sind. Reiner Bentonit lässt sich zudem nicht gut auf eine Struktur aufbringen, und eine außenseitig aufgebrachte Bentonitschicht hält den mechanischen Belastungen beim Einvibrieren oder Einrammen in den Untergrund nicht unbeschadet stand. Zudem sind die eingesetzten Materialien nicht kostengünstig. Ferner lässt sich der Expansionsprozess bei der DE 10 2017 121 037 A1 zeitlich nicht steuern. Vielmehr startet der Expansionsprozess bei dem verwendeten wasserreaktiven quellfähigen Material unmittelbar bei einem Kontakt mit Wasser bzw. unmittelbar nach dem Einbringen. Dies kann problematisch sein, wenn das Einbringen des Profilendabschnitts in den Offshore-Baugrund nicht wie vorgesehen erfolgt, sondern wenn es beispielsweise zu Verzögerungen kommt, nachdem der mit dem quellfähigen Material beschichtet Endabschnitt beispielsweise bereits ins Wasser eingetaucht wurde. Dann kann die Expansion des quellfähigen Materials bereits vollendet sein, bevor der Profilendabschnitt final eingebracht ist. Dies wiederum führt dazu, dass die Verspannung nicht in gewünschter Weise erhöht werden kann, so dass die Tragfähigkeit reduziert ist bzw. nicht wie geplant erhöht wird. In diesem Fall müssen dann Zusatzmaßnahmen zur Bodenverdichtung getroffen werden, die mit einem hohen Aufwand verbunden sind.

Das nachträgliche Einbringen von Vergussmassen in Bauwerksstrukturen, die die Vergussmasse einschließen, wobei die Vergussmasse mit Hilfe der Alkali-Kieselsäure-Reaktion dem Schwund entgegenwirkt, hat zum einen den Nachteil, dass mehrere einander durchdringende Bauwerksstrukturen, die die Vergussmasse umschließen, erforderlich sind. Zum anderen hat diese Methode den Nachteil, dass die Vergussmasse nach dem Einbringen des Gründungspfahls in die Struktur injiziert werden muss. Dies ist insbesondere bei Offshore-Bauwerken mit hohem Aufwand verbunden.

Aufgabe der Erfindung war es daher, einen Gründungspfahl sowie ein Verfahren zu seiner Herstellung bereitzustellen, die die Nachteile des Stands der Technik zumindest teilweise überwinden. Insbesondere war es Aufgabe der Erfindung, einen Gründungspfahl und ein Verfahren zu seiner Herstellung bereitzustellen, der eine stabile, umweltschonende und kostengünstige Gründung insbesondere bei Offshore-Bauwerken erlaubt.

ZUSAMMENFASSUNG DER ERFINDUNG

Diese Aufgabe wird gelöst durch einen Gründungspfahl, insbesondere für Offshore-Bauwerke, mit einem Pfahlendabschnitt zum Einbringen in einen Untergrund, umfassend am Pfahlendabschnitt außenseitig eine zementhaltige Schicht, wobei die zementhaltige Schicht mit einer Oberfläche mit dem Untergrund in Kontakt gelangt und wobei die zementhaltige Schicht mindestens einen volumenvergrößernden Inhaltsstoff enthält.

Die Aufgabe wird ferner gelöst durch ein Verfahren zur Herstellung eines erfindungsgemäßen Gründungspfahls mit einem Pfahlendabschnitt zum Einbringen in einen Untergrund und umfassend am Pfahlendabschnitt eine zementhaltige Schicht, enthaltend die Schritte

    a. Bereitstellen eines rohrförmigen Grundkörpers des Gründungspfahls
    b. Aufbringen auf den Pfahlendabschnitt einer zementhaltigen Mischung enthaltend mindestens einen volumenvergrößernden Inhaltsstoff zur Ausbildung der zementhaltigen Schicht.

Die Aufgabe wird schließlich gelöst durch eine Verwendung eines erfindungsgemäßen Gründungspfahls als Gründung für ein Offshore-Bauwerk, insbesondere eine Offshore-Windkraftanlagen.

Der Gründungspfahl umfasst einen Pfahlendabschnitt zum Einbringen in einen Untergrund. Im bestimmungsgemäßen Zustand des Gründungspfahls ist der Pfahlendabschnitt im Untergrund angeordnet. Der Gründungspfahl umfasst eine am Pfahlendabschnitt außenseitig angebrachte zementhaltige Schicht, wobei die zementhaltige Schicht mit einer Oberfläche mit dem Untergrund in Kontakt gelangt und wobei die zementhaltige Schicht mindestens einen volumenvergrößernden Inhaltsstoff enthält.

Indem im Gegensatz zum Stand der Technik nicht ein quellfähiges Material unmittelbar an der Außenseite des Pfahlendabschnitts angebracht wird, sondern eine zementhaltige Schicht, die mindestens einen volumenvergrößernden Inhaltsstoff enthält, wird eine Erhöhung der Verspannung an der Kontaktfläche zwischen dem Untergrund und dem Pfahlendabschnitt des Gründungspfahls in verbesserter Weise ermöglicht. Insbesondere kann die zementhaltige Schicht den mechanischen Belastungen, die beim Einbringen des Gründungspfahls in den Untergrund auftreten, gut widerstehen. Ferner wird durch die Verwendung einer zementhaltigen Schicht, wobei die zementhaltige Schicht mindestens einen volumenvergrößernden Inhaltsstoff enthält, eine verlangsamte Volumenvergrößerung der zementhaltigen Schicht bewirkt. Durch diese Verlangsamung kann sichergestellt werden, dass die Volumenvergrößerung und damit die Verspannung mit dem Untergrund erst dann stattfindet, wenn der Pfahlendabschnitt in den Untergrund eingebracht ist. Zudem werden durch die Verwendung der zementhaltigen Schicht keine umweltbelastenden Stoffe freigesetzt. Ferner ist es aufgrund der durch die volumenvergrößernden Inhaltsstoffe hervorgerufenen besseren Verspannung mit dem Untergrund möglich, den Gründungspfahl in den Untergrund einzuvibrieren, was gerade bei Offshore-Bauwerken vorteilhaft ist, da dadurch die Schallbelastung für maritime Lebewesen reduziert werden kann. Schließlich kann die Gründung kostengünstig durchgeführt werden, da sowohl Zement als auch die volumenvergrößernden Inhaltsstoffe kostengünstig sind und durch die Anbringung der zementhaltigen Schicht auf dem Pfahlendabschnitt des Gründungspfahls selbst sowie durch den direkten Kontakt der zementhaltigen Schicht mit dem Untergrund zusätzliche Strukturen nicht erforderlich sind.

## BEVORZUGTE AUSFÜHRUNGSFORMEN DER ERFINDUNG

Ein Gründungspfahl meint anmeldungsgemäß insbesondere ein langgestrecktes Bauteil, welches vorzugsweise einen im Wesentlichen gleichen Querschnitt aufweisen kann. Ein Gründungspfahl kann sich aber auch zu einem Ende verjüngen und ein Übergangsstück aufweisen. Ein Gründungspfahl kann ein massiver bzw. geschlossener Pfahl (z.B. Vollpfahl) oder ein offener bzw. hohler Pfahl (z.B. Hohlpfahl) sein. Ein Gründungspfahl kann vorzugsweise aus Metall, insbesondere Stahl, gebildet sein. Jedoch sind auch andere Materialien alternativ oder zusätzlich denkbar, wie Beton, Glasfaser (Glasfaserverbundwerkstoff), Carbonfaser (Carbonfaserverbundwerkstoff) und/oder Holz. Die Querschnittsform kann grundsätzlich beliebig gebildet sein, vorzugsweise im Wesentlichen kreisförmig. Insbesondere kann der Gründungspfahl zylinder- bzw. turmförmig gebildet sein.

Ein anmeldungsgemäßer Gründungspfahl umfasst einen Pfahlendabschnitt. Mit dem Pfahlendabschnitt wird insbesondere der Teil bzw. Abschnitt des Gründungspfahls bezeichnet, welcher in einem bestimmungsgemäßen bzw. installierten Zustand des Gründungspfahls, also wenn der Gründungspfahl mit einer gewünschten (Mindest-) Eindringtiefe in den Untergrund eingebracht ist, in dem Untergrund angeordnet ist, also im Wesentlichen unterhalb der Untergrundoberfläche liegt. Dieser Abschnitt kann auch als Ankerabschnitt bezeichnet werden, da dieser dem Verankern des Gründungspfahls in dem Untergrund dient. Der weitere Teil bzw. Abschnitt des Gründungspfahls oberhalb des Pfahlendabschnitts kann ganz oder teilweise von Wasser umgeben und dient insbesondere dem Tragen einer sich (unmittelbar oder mittelbar) anschließenden Offshore-Einrichtung.

Der Gründungspfahl kann Teil einer Gründung sein oder die Gründung bilden. Eine Gründung und damit der anmeldungsgemäße Gründungspfahl kann insbesondere ein Teil eines Offshore-Bauwerks sein. Ein Gründungspfahl dient insbesondere dem Tragen einer Offshore-Einrichtung des Offshore-Bauwerks.

Eine Offshore-Vorrichtung bzw. ein Offshore-Bauwerk ist vorzugsweise eine Offshore-Windenergievorrichtung, wie eine Offshore-Windkraftanlage, ein Offshore-Messmast oder eine Offshore-Umspannstation. Ferner kann ein Offshore-Bauwerk eine Bohroder Förderplattform oder eine sonstige Plattform zur Gewinnung, Umwandlung oder Speicherung von Energie sein, wie z.B. eine Anlage zur Produktion von Wasserstoff.

Wie bereits beschrieben wurde, kann ein Offshore-Bauwerk eine Offshore-Einrichtung umfassen, die durch das anmeldungsgemäße Gründungsprofil in einem Offshore-Baugrund, vorzugsweise in Form eines Gewässerbodens, insbesondere eines Meeresbodens, befestigt sein kann. Ein Offshore-Bauwerk kann insbesondere durch die Offshore-Einrichtung (z.B. eine Plattform, eine Gondel etc.) und die Gründung gebildet sein.

Beispielhafte und nicht abschließende Gründungen bzw. Gründungsstrukturen sind Monopile-, Tripod-, Tripile- oder Jacket-Gründungen. Eine derartige Gründung kann mindestens einen Gründungspfahl umfassen. Der Gründungspfahl kann insbesondere ein Monopile sein.

Vorzugsweise gelangt die zementhaltige Schicht mit der größten Oberfläche, die nicht mit dem Pfahlendabschnitt in Kontakt steht, mit dem Untergrund in Kontakt.

Erfindungsgemäß ist die zementhaltige Schicht untrennbar mit dem Pfahlendabschnitt verbunden.

Die zementhaltige Schicht kann verschiedene Längen des Pfahlendabschnitts bedecken. Insbesondere kann die zementhaltige Schicht 5% bis 100%, vorzugsweise 5% bis 70% der Länge des Pfahlendabschnitts bedecken. Durch eine Anpassung der Länge des Pfahlendabschnitts, die die zementhaltige Schicht bedeckt, kann den jeweiligen Begebenheiten des Untergrunds Rechnung getragen werden. Wird eine größere Länge bedeckt, ist die Verspannung mit dem Untergrund größer. Das Bedecken einer geringeren Länge ist kostengünstiger.

Die zementhaltige Schicht kann Zement in unterschiedlichen Mengen enthalten. So kann die zementhaltige Schicht mindestens 30 M.-%, vorzugsweise mindestens 40 M.-%, weiter bevorzugt mindestens 50 M.-% Zement enthalten, bezogen auf die Gesamtmasse der zementhaltigen Schicht. Die zementhaltige Schicht enthält Zement in diesen Mengen vorzugsweise dann, wenn die zementhaltige Schicht Gesteinszuschläge, beispielsweise Feinkorn oder Grobkorn, enthält.

Die zementhaltige Schicht kann aber auch mindestens 70 M.-%, vorzugsweise mindestens 80 M.-%, weiter bevorzugt mindestens 90 M.-% Zement enthalten, bezogen auf die Gesamtmasse der zementhaltigen Schicht. Die zementhaltige Schicht enthält Zement in diesen Mengen vorzugsweise dann, wenn die zementhaltige Schicht im wesentlichen keine Gesteinszuschläge enthält.

Der massenbezogene Anteil des Zugabewassers beträgt mindestens 20 M.-% und höchstens 70 M.-%, vorzugsweise von 30 M.-% bis 60 M.-%, bezogen auf die Gesamtmasse der zementhaltigen Mischung.

Als Zement für die zementhaltige Schicht kommen verschiedene Arten von Zement in Frage. Insbesondere kann die zementhaltige Schicht Zement der Art CEM I, CEM II, CEM III oder CEM IV enthalten. Die zementhaltige Schicht kann aber auch Calciumsulfataluminat-Zement enthalten. Die Zementarten CEM I, CEM II, CEM III und CEM IV sind in der Norm DIN EN 197-1:2011-11 näher beschrieben.

Die zementhaltige Schicht enthält volumenvergrößernde Inhaltsstoffe. Die durch die volumenvergrößernden Inhaltsstoffe bewirkte Volumenvergrößerung der zementhaltigen Schicht ist bevorzugt begrenzt. Die Volumenvergrößerung kann beispielsweise durch Messung einer Längenänderung oder einer Dickenänderung der zementhaltigen Schicht ermittelt werden. Vorzugsweise beträgt eine Längenänderung oder eine Dickenänderung der zementhaltigen Schicht über einen Zeitraum von 1 bis 10 Jahren 0,5 Promille bis 50 Promille, weiter bevorzugt 0,5 Promille bis 20 Promille, noch weiter bevorzugt 1 bis 10 Promille, besonders bevorzugt 1 bis 5 Promille, bezogen auf die ursprüngliche Länge bzw. Dicke. Dadurch kann eine Volumenvergrößerung der zementhaltigen Schicht erreicht werden, die die Verspannung mit dem Untergrund verbessert, wobei gleichzeitig die zementhaltige Schicht keinen Schaden nimmt, der die mechanischen Eigenschaften der zementhaltigen Schicht verschlechtert. Es hat sich herausgestellt, dass sogenannte Sprengzemente oder Quellsprengstoffe wie Dynacem® trotz ihrer volumenvergrößernden Eigenschaften nicht geeignet sind, da die zementhaltige Schicht durch die hohe Volumenvergrößerung zu früh Schäden nimmt, die ihre mechanischen Eigenschaften insbesondere während der Installation verschlechtert.

Erfindungsgemäß wird die Volumenvergrößerung durch eine chemische Reaktion hervorgerufen. Weiter bevorzugt wird die Volumenvergrößerung im Wesentlichen, insbesondere ausschließlich, durch eine chemische Reaktion hervorgerufen. Beispielsweise kann die Volumenvergrößerung auf sogenannten treibenden Angriffen beruhen. Beispiele für treibende Angriffe sind Kalktreiben, Magnesiatreiben, Sulfattreiben und Alkalitreiben. Diese sind in dem Buch "Bauchemie" von Thomas Mallon, Vogel Fachbuch, Kamprath-Reihe, 1. Auflage 2005, Seiten 118 bis 121 beschrieben. Dem Alkalitreiben liegt die Alkali-Kieselsäure.-Reaktion zugrunde. Auf diese Weise kann die Volumenvergrößerung besser gesteuert und insbesondere verlangsamt werden. Durch die Kombination der geringen Volumenvergrößerung und dem Hervorrufen der Volumenvergrößerung durch eine chemische Reaktion kann die Volumenvergrößerung insbesondere derart verlangsamt werden, dass eine werksseitige Applikation der zementhaltigen Schicht möglich ist. Dies vereinfacht das Herstellungsverfahren und insbesondere auch die Erstellung, berücksichtigt Verzögerungen im Bau und Installationsablauf der Gründung und senkt die Kosten. Der mindestens eine volumenvergrößernde Inhaltsstoff ist vorzugsweise in der Lage durch einen treibenden Angriff eine Volumenvergrößerung zu bewirken.

Der mindestens eine volumenvergrößernde Inhaltsstoff ist vorzugsweise ausgewählt aus der Gruppe bestehend aus Hartbranntkalk, Hartbranntdolomit, Glasgranulat, amorphe Gesteinskörnungen, gestresste Gesteinskörnungen, Quarz, reaktives Gestein wie Grauwacke oder Opal, korrosives Metallpulver wie Eisenpulver, korrosive Metallspäne wie Eisenspäne und korrosive Metallfasern wie Stahlfasern. Weiter bevorzugt ist der mindestens eine volumenvergrößernde Inhaltsstoff ausgewählt aus der Gruppe bestehend aus Hartbranntkalk, Hartbranntdolomit, Glasgranulat, amorphe Gesteinskörnungen, gestresste Gesteinskörnungen, Quarz, Grauwacke und Opal. Die vorgenannten Inhaltsstoffe ermöglichen eine kontrollierte und insbesondere eine verlangsamte Volumenvergrößerung.

Hartbranntkalk ist insbesondere Calciumoxid, der durch Brennen von Kalkstein bei Temperaturen von mehr als 1100°C und bis zu 1400°C gewonnen wurde. Vorzugsweise weist Hartbranntkalk beim Löschvorgang mit Wasser eine Reaktionsgeschwindigkeit (Nasslöschkurve EN 459) von mehr als 6 Minuten auf. Neben Hartbranntkalk gibt es auch Weich- und Mittelbranntkalk. Diese werden ebenfalls durch Brennen von Kalkstein gewonnen. Weichbranntkalk wird durch Brennen von Kalkstein bei Temperaturen von 900°C bis 1000°C gewonnen. Weichbranntkalk weist eine Reaktionsdauer beim Löschvorgang mit Wasser von weniger als 2 Minuten auf.

Hartbranndolomit ist Calciummagnesiumoxid ($CaMgO_2$), der durch Brennen von Dolomit gewonnen wird. Wie Hartbranntkalk weist Hartbranntdolomit ebenfalls eine längere Reaktionsdauer beim Löschvorgang mit Wasser auf. Hartbranntkalk und Hartbranntdolomit können insbesondere durch Kalktreiben eine Volumenvergrößerung bewirken.

Ein Beispiel für Glasgranulat ist Borosilikatglasgranulat, ein weiteres ist Quarzglasgranluat. Der Einsatz von Quarzglasgranulat oder Borosilikatglasperlen ist auch möglich, insbesondere wenn diese nicht mit Flusssäure geätzt wurden. Hier empfiehlt sich eine Körnung 1/2 oder 2/4. Die Korngröße sollte mindestens 1mm betragen.

Das Glasgranulat, die amorphen Gesteinskörnungen, die gestressten Gesteinskörnung, Quarz, Grauwacke und Opal können eine Volumenvergrößerung durch Alkalitreiben bewirken.

Die zementhaltige Schicht kann ferner ein NazO-Äquivalent von mehr als 1,1 M.-%, insbesondere mehr als 1,2 M.-% aufweisen. Das NazO-Äquivalent wird berechnet nach der Formel $Na_2O$-Äquivalent in M.-% = Menge an $Na_2O$ in M.-% + 0,658 mal der Menge an $K_2O$ in M.-%.

Es wird normalerweise versucht, in zementhaltigen Bauwerken die obigen hohen $Na_2O$-Äquivalente zu vermeiden, da das Alkalitreiben in beton- und zementhaltigen Bauwerken normalerweise nicht erwünscht ist. Mit einem $Na_2O$-Äquivalent in dem oben angegebenen Bereich wird aber in der zementhaltigen Schicht die Volumenvergrößerung begünstigt und damit die Verspannung mit dem Untergrund gefördert. Das $Na_2O$-Äquivalent kann auch durch Zugabe von z. B. Natronlauge eingestellt werden, dabei hat sich erwiesen, dass mit NaOH künstlich eingestelltes $Na_2O$-Äquivalent höheres Quellvermögen bewirkt, als bei Zugabe von Kaliumsulfat $K_2SO_4$ erreicht wird.

Die zementhaltige Schicht kann die oben genannten Inhaltsstoffe in unterschiedlichen Mengen enthalten.

Die zementhaltige Schicht kann 0,5 M.-% oder mehr, vorzugsweise 0,5 bis 15 M.-%, weiter bevorzugt 1 bis 10 M.-%, besonders bevorzugt 1 bis 5 M.-% oder 0,5 bis 10 M.-%, bevorzugt 0,5 bis 5 M.-%, weiter bevorzugt 0,5 bis 2 M.-% kalktreibende Inhaltsstoffe wie Hartbranntkalk und/oder Hartbranntdolomit enthalten, bezogen auf die Gesamtmasse der zementhaltigen Schicht.

Die zementhaltige Schicht kann 20 M.-% oder mehr, vorzugsweise 20 bis 70 M.-%, weiter bevorzugt 30 bis 60 M.-%, besonders bevorzugt 40 bis 60 M.-% alkalitreibende Inhaltsstoffe wie Glasgranulat, amorphe Gesteinskörnungen, gestresste Gesteinskörnungen, Quarz, Grauwacke und/oder Opal enthalten, bezogen auf die Gesamtmasse der zementhaltigen Schicht.

Hartbranntkalk in der zementhaltigen Schicht kann eine Korngröße von 1 mm oder weniger, 0,5 mm oder weniger oder 0,25 mm oder weniger aufweisen. Mit kleineren Korngrößen ist ein besseres Verhalten bei der Volumenvergrößerung beobachtet worden.

Hartbranntdolomit in der zementhaltigen Schicht kann eine Korngröße von 1 mm oder weniger, 0,5 mm oder weniger oder 0,25 mm oder weniger aufweisen. Mit kleineren Korngrößen ist ein besseres Verhalten bei der Volumenvergrößerung beobachtet worden.

Glasgranulat, amorphe Gesteinskörnungen, gestresste Gesteinskörnungen, Quarz, Grauwacke oder Opal in der zementhaltigen Schicht können eine Korngröße von 0,5 mm oder mehr, insbesondere von 0,5 bis 10 mm oder von 1 bis 5 mm aufweisen. Vorzugsweise weisen Glasgranulat, amorphe Gesteinskörnungen, gestresste Gesteinskörnungen, Quarz, Grauwacke oder Opal eine Körnung 1/2 oder 2/4 auf. Vorzugsweise weisen die Körnungen einen Überkornanteil von maximal 15 M.-% und einen Unterkornanteil von maximal 20 M.-% auf. Mit größeren Korngrößen ist ein besseres Verhalten bei der Volumenvergrößerung beobachtet worden. Die Korngröße sollte jedoch nicht zu groß sein, um auch dünne zementhaltige Schicht zu ermöglichen.

Die Korngröße kann durch Siebversuche ermittelt werden.

Die zementhaltige Schicht kann zwei oder mehr der oben genannten Inhaltsstoffe enthalten. Vorzugsweise enthält die zementhaltige Schicht einen Inhaltsstoff, der durch Kalktreiben eine Volumenvergrößerung bewirken kann und einen Inhaltsstoff, der durch Alkalitreiben eine Volumenvergrößerung bewirken kann, beispielsweise Hartbranntkalk und Glasgranulat. Enthält die zementhaltige Schicht zwei oder mehr der oben genannten Inhaltsstoffe, können diese in der zementhaltigen Schicht gleichmäßig oder ungleichmäßig verteilt sein. Beispielsweise kann in einer ersten Lage der zementhaltigen Schicht ein Inhaltsstoff enthalten sein, der eine schnellere Volumenvergrößerung zeigt, wie beispielsweise ein kalktreibender Inhaltsstoff und in einer zweiten Lage ein Inhaltsstoff enthalten sein, der eine langsamere Volumenvergrößerung zeigt, wie beispielswiese ein alkalitreibender Inhaltsstoff.

Die zementhaltige Schicht kann weitere Stoffe enthalten. Die zementhaltige Schicht kann Stoffe enthalten, die durch Wasseraufnahme quellen. Beispielsweise kann die zementhaltige Schicht Bentonit und/oder tonminerale Gemische wie Montmorillonit enthalten. Dadurch kann ebenfalls eine Volumenvergrößerung bewirkt werden, die insbesondere nicht über eine chemische Reaktion abläuft. Diese Volumenvergrößerung kann insbesondere schneller als die treibenden Angriffe ablaufen.

Die zementhaltige Schicht kann 1 bis 30 M.-%, vorzugsweise 1 bis 20 M.-%, weiter bevorzugt 1 bis 10 M.-%, oder 30 M.-% oder weniger, bevorzugt 20 M.-% oder weniger, weiter bevorzugt 10 M.-% oder weniger, noch mehr bevorzugt 5 M.-% oder weniger, besonders bevorzugt 3 M.-% oder weniger, Bentonit und/oder tonminerale Gemische wie Montmorillonit enthalten, bezogen auf die Gesamtmasse der zementhaltigen Schicht.

Vorzugsweise ist die zementhaltige Schicht frei von Bentonit. Bei zementhaltigen Schichten, die wenig oder kein Bentonit enthalten, ist die Verspannung mit dem Untergrund besser. Insbesondere kann die Volumenvergrößerung langsamer erfolgen, wodurch in der zementhaltigen Schicht insbesondere weniger mechanischer Stress in kurzer Zeit erzeugt werden kann.

Die zementhaltige Schicht kann außerdem ein wasserabsorbierendes Polymer, beispielsweise ein superabsorbierendes Polymer, aufweisen. Die zementhaltige Schicht kann insbesondere 0,01 bis 1 M.-%, vorzugsweise 0,01 bis 0,5 M.-%, weiter bevorzugt 0,01 bis 0,3 M.-%, wasserabsorbierendes Polymer enthalten, bezogen auf das Gesamtgewicht der zementhaltigen Schicht. Mit derartigen Polymeren in der zementhaltigen Schicht ist ein besseres Verhalten bei der Volumenvergrößerung beobachtet worden. Ohne an eine wissenschaftliche Theorie gebunden sein zu wollen, wird vermutet, dass wasserabsorbierende Polymere den notwendigen Zutritt von Wasser durch ihre wasserabsorbierenden Eigenschaften aber auch durch eine Auflockerung des Gefüges bewirken und regulieren. Wasserabsorbierende Polymere können insbesondere in Kombination mit Hartbranntkalk, Hartbranntdolomit, Glasgranulat, amorphen Gesteinskörnungen, gestressten Gesteinskörnungen, Quarz, Grauwacke und/oder Opal ein besseres Verhalten bei der Volumenvergrößerung bewirken.

Die zementhaltige Schicht kann ferner Weichbranntkalk enthalten. Vorzugsweise enthält die zementhaltige Schicht 0,1 bis 20 M.-%, weiter bevorzugt 0,1 bis 10 M.-%, besonders bevorzugt 0,1 bis 5 M.-% Weichbranntkalk, bezogen auf die Gesamtmasse der zementhaltigen Schicht. Dadurch kann man dem anfänglichen Schwund der Zementschicht, der durch das Aushärten der Zementschicht bewirkt wird, entgegenwirken. Die weitere Volumenzunahme durch die oben genannten Inhaltsstoffe bewirkt dadurch unmittelbar eine Verspannung mit dem Untergrund.

Die zementhaltige Schicht kann ferner, Eisenspäne, Eisenpulver oder Stahlfasern enthalten. Diese Inhaltsstoffe führen durch Korrosion langfristig auch zu einer Volumenzunahme.

Vorzugsweise enthält die zementhaltige Schicht zwei oder mehr, weiter bevorzugt drei oder mehr, der vorgenannten Inhaltsstoffe und Stoffe.

Je nach verwendeten Zement, Einsatzumgebung und Temperatur lässt sich so die gewünschte Expansion schneller oder langsamer sowie stärker oder schwächer einstellen.

Gemäß einer bevorzugten Ausführungsform enthält die zementhaltige Schicht wasserabsorbierendes Polymer und mindestens einen der vorgenannten Inhaltsstoffe, insbesondere Glasgranulat und/oder Hartbranntkalk.

Gemäß einer weiteren bevorzugten Ausführungsform enthält die zementhaltige Schicht wasserabsorbierendes Polymer, Glasgranulat und Hartbranntkalk.

Die zementhaltige Schicht kann den Pfahlendabschnitt vollumfänglich, also über den gesamten Umfang, umgeben. Die zementhaltige Schicht kann dabei den Pfahlendabschnitt über den gesamten Umfang unterbrochen oder ununterbrochen, vorzugsweise ununterbrochen, umgeben. Ein unterbrochenes Umgeben entspricht dabei einer segmentweisen oder abschnittsweisen Anbringung der zementhaltigen Schicht über den gesamten Umfang des Pfahlendabschnitts. Auf diese Weise kann die Volumenvergrößerung und damit die Verspannung mit dem Untergrund gesteuert werden.

Die zementhaltige Schicht kann eine Dicke von 10 bis 100 mm, insbesondere von 10 bis 80 mm oder von 10 bis 50 mm aufweisen. Über die Dicke der zementhaltigen Schicht kann das Ausmaß der Verspannung mit dem Untergrund eingestellt werden.

Ferner kann die zementhaltige Schicht eine Bewehrung enthalten. Die Bewehrung kann beispielsweise aus Stahl oder Carbonfaser sein.

Vorzugsweise ist die zementhaltige Schicht erstarrt. Weiter bevorzugt ist die zementhaltige Schicht in Folge chemischer Reaktion erstarrt.

Um den Zutritt von Wasser in die zementhaltige Schicht einzustellen, kann die zementhaltige Schicht auch Löcher enthalten.

Um die zementhaltige Schicht kann ferner eine Umhüllung angebracht sein. Vorzugsweise hemmt die Umhüllung eine Volumenvergrößerung der zementhaltigen Schicht zumindest für einen gewissen Zeitraum. Die Umhüllung kann ein vollflächiger Mantel oder ein netz- oder gewebeartiger Mantel sein. Die Umhüllung kann aus einem Material sein, so dass sie in Kontakt mit Wasser ihre hemmende Wirkung auf die Volumenvergrößerung verliert. Beispielsweise kann die Umhüllung aus Stahl sein. Auf diese Weise kann die Volumenvergrößerung weiter verzögert werden. So korrodiert eine Umhüllung aus Stahl beispielsweise im Lauf der Zeit und verliert dadurch ihre hemmende Wirkung, so dass im Lauf der Zeit die Volumenvergrößerung der zementhaltigen Schicht ihre verspannende Wirkung auf den Untergrund entfaltet. Eine Umhüllung aus Stahl hat ferner den Vorteil, dass Stahl selbst durch Korrosion eine Volumenvergrößerung erfährt.

Wird eine Umhüllung verwendet, weist sie vorzugsweise eine Dicke D auf, die der Gleichung (1) gehorcht:

$$D = [\text{E-Modul(zementhaltige Schicht)} * \text{Dicke(zementhaltige Schicht)}]/$$

$$[\text{Grenzfließspannung der Umhüllung}] \qquad (1)$$

Um eine Verzögerung der Volumenvergrößerung sicherzustellen, kann um die zementhaltige Schicht oder um die Umhüllung eine den Zutritt von Wasser unterbindende Schutzfolie angebracht sein.

Die Schutzfolie kann ein biologisch abbaubares Material enthalten oder daraus bestehen. Die Schutzfolie kann insbesondere ein biologisch abbaubares Polymer enthalten oder daraus bestehen. Beispielsweise kann die Schutzfolie Polymilchsäure, thermoplastischen Polyester, Polyhydroxyfettsäuren, Polyhydroxyalkanoate wie Polyhydroxybutyrat und Polyhydroxyvalerat, Cellulosederivate, Lignin, Chitin und/oder Proteine wie Casein und Gelatine enthalten oder daraus bestehen.

Durch die Schutzfolie kann der Zutritt von Wasser insbesondere während der Zeit zwischen Herstellung und bauseitiger Installation des Pfahls vermindert werden. Nach dem Einbringen in den Untergrund wird die Schutzfolie biologisch abgebaut, so dass durch den dann erfolgenden Wasserzutritt die Volumenvergrößerung der zementhaltigen Schicht eintritt.

Nach einem zweiten Aspekt betrifft die Erfindung ein Verfahren zur Herstellung eines anmeldungsgemäßen Gründungspfahls mit einem Pfahlendabschnitt zum Einbringen in einen Untergrund und umfassend am Pfahlendabschnitt eine zementhaltige Schicht, enthaltend die Schritte

a. Bereitstellen eines rohrförmigen Grundkörpers des Gründungspfahls,
b. Aufbringen auf den Pfahlendabschnitt einer zementhaltigen Mischung enthaltend mindestens einen volumenvergrößernden Inhaltsstoff zur Ausbildung der zementhaltigen Schicht.

Für den mindestens einen volumenvergrößernden Inhaltsstoff, die zementhaltige Mischung und die zementhaltige Schicht des anmeldungsgemäßen Verfahrens gilt das vorstehend zur zementhaltigen Schicht Gesagte entsprechend. Ebenso gilt für den Gründungspfahl und den Pfahlendabschnitt das vorstehend zum Gründungspfahl und zum Pfahlendabschnitt Gesagte entsprechend.

Der zementhaltigen Mischung kann Natronlauge zugegeben werden, um den Na$_2$O-Äquivalent einzustellen.

Die zementhaltige Schicht härtet nach dem Aufbringen insbesondere durch die chemische Reaktion des Zements mit Wasser aus. Die Erhärtungsdauer kann insbesondere 5 Tage betragen. Vorzugsweise ist die chemische Reaktion des Zements 24 Stunden nach dem Aufbringen ca. 50% abgeschlossen. Weiter bevorzugt ist die chemische Reaktion des Zements 48 Stunden nach dem Aufbringen ca. 80% abgeschlossen. Die Erhärtungsdauer kann dabei durch die Verwendung von Reaktionshemmern verlängert, insbesondere auf 14 Tage verlängert, werden.

Ferner kann der zementhaltigen Mischung Erstarrungsbeschleuniger zugegeben werden. Dadurch kann das Aufbringen der zementhaltigen Mischung auf den rohrförmigen Grundkörper erleichtert werden und ein runtertropfen der zementhaltigen Mischung weitgehend vermieden werden.

Der rohrförmige Grundkörper kann eine außenliegende Bewehrung für die zementhaltige Mischung aufweisen. Dadurch weist die zementhaltige Schicht eine stabilisierende Bewehrung auf. Ferner wird dadurch das Aufbringen der zementhaltigen Mischung auf den Pfahlendabschnitt erleichtert.

Beim Aufbringen der zementhaltigen Mischung wird der rohrförmige Grundkörper vorzugsweise um seine Längsachse gedreht.

Die zementhaltige Mischung kann in einem Schritt in einer Dicke aufgebracht werden, die der gewünschten Dicke der zementhaltigen Schicht entspricht. Die zementhaltige Schicht kann aber auch lagenweise in mehreren Schritten bis zur gewünschten Dicke aufgebracht werden. Zwischen dem Aufbringen der einzelnen Lagen kann ein Trocknungsschritt erfolgen. Beispielsweise kann eine erste Lage der zementhaltigen Mischung aufgebracht werden und mindestens 24 Stunden, insbesondere mindestens 72 Stunden getrocknet werden, wobei die Dicke der ersten Lage mindestens 50%, insbesondere mindestens 75% der Dicke der zementhaltigen Schicht beträgt. Die erste Lage kann beispielsweise eine Dicke von 10 bis 20 mm aufweisen. Die zweite Lage kann beispielsweise eine Dicke von 5 bis 15 mm aufweisen. Die erste Lage kann ferner einen höheren Gehalt an das Volumen schneller vergrößerndem Material aufweisen, als die zweite Lage. Beispielsweise kann die erste Lage Hartbrannkalk enthalten und die zweite Lage Glasgranulat enthalten.

Die zementhaltige Mischung wird vorzugsweise auf den rohrförmigen Grundkörper aufgespritzt.

Die zementhaltige Mischung weist vorzugsweise eine Haftzugfestigkeit von 0,5 bis 5 MPa, weiter bevorzugt von 1 bis 3 MPa auf.

Der Wasser/Zement-Wert (w/z)-Wert der zementhaltigen Mischung beträgt vorzugsweise 0,3 bis 0,7, weiter bevorzugt 0,4 bis 0,6, besonders bevorzugt 0,45 bis 0,55.

Ein noch weiterer Aspekt ist die Verwendung eines anmeldungsgemäßen Gründungspfahls in einer Gründung für ein Offshore-Bauwerk, insbesondere eine Offshore- Windkraftanlage.

Die Merkmale der Gründungspfähle und des Herstellungsverfahrens sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert, eigenständig erfinderisch sein.

Es gibt nun eine Vielzahl von Möglichkeiten, den anmeldungsgemäßen Gründungspfahl, das anmeldungsgemäße Verfahren und die anmeldungsgemäße Verwendung auszugestalten und weiterzuentwickeln. Hierzu sei einerseits verwiesen auf die den unabhängigen Ansprüchen nachgeordneten Ansprüche, andererseits auf die nachfolgende Figurenbeschreibung in Verbindung mit der Zeichnung sowie die nachfolgenden Beispielmischungen der zementhaltigen Schicht. In der Zeichnung zeigt

Fig. 1     eine schematische Darstellung eines erfindungsgemäßen Gründungspfahls,

Fig. 2     ein Diagramm mit der Längenänderung über die Zeit von Prismen mit Schwindzapfen aus einer Zementmischung enthaltend dolomitischen Hartbranntkalk,

Fig. 3     ein Diagramm mit der Längenänderung über die Zeit von Prismen mit Schwindzapfen aus einer Zementmischung enthaltend calcitischen Hartbranntkalk,

Fig. 4     ein Diagramm mit der Längenänderung über die Zeit von Prismen mit Schwindzapfen aus einer Zementmischung enthaltend dolomitischen Hartbranntkalk,

Fig. 5     ein Diagramm mit der Längenänderung über die Zeit von Prismen aus einer Zementmischung enthaltend Glasgranulat, und

Fig. 6    ein Diagramm mit der Längenänderung über die Zeit von Prismen aus einer Zementmischung enthaltend Glasgranulat.

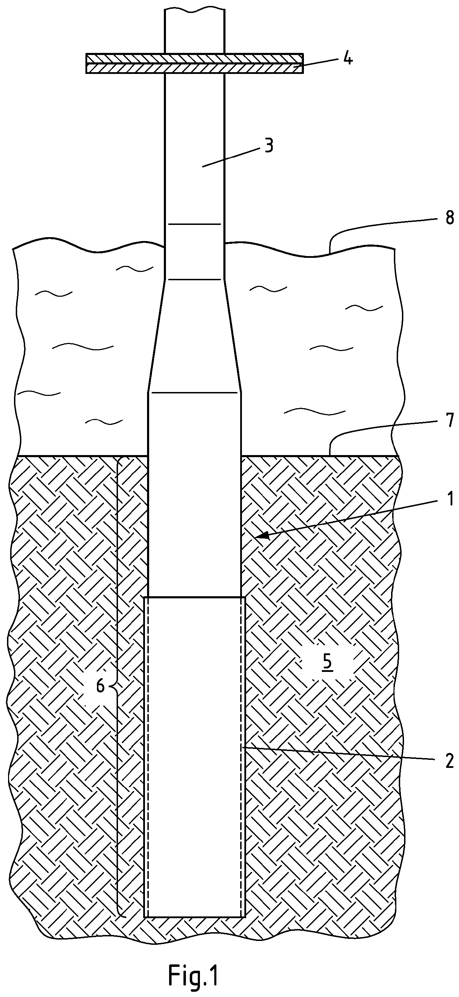

Die Figur 1 zeigt schematisch einen Teil eines Offshore-Bauwerks. Das Offshore-Bauwerk umfasst dabei einen Gründungspfahl 1 mit einem Übergangsstück 3 und einem Pfahlendabschnitt 6, der in den Untergrund 5 eingebracht ist. Außenseitig am Pfahlendabschnitt 6 ist eine zementhaltige Schicht 2 angebracht. Über der Oberfläche des Untergrunds 7 ist Meerwasser bis zur Meerwasseroberfläche 8. Das Offshore-Bauwerk weist ferner eine Plattform 4 auf.

Der Gründungspfahl ist Onshore hergestellt worden und wurde werksseitig mit der zementhaltigen Schicht 2 versehen. Die zementhaltige Schicht 2 ist vollumfänglich und ununterbrochen um den Pfahlendabschnitt 6 angebracht. Die zementhaltige Schicht 2 ist nicht über die gesamte Länge des Pfahlendabschnitts 6 angebracht, sondern lediglich über etwa 2/3 der Länge des Pfahlendabschnitts 6. Die zementhaltige Schicht 2 weist mehr als 90 M.-% Zement und 1 bis 5 M.-% Hartbranntkalk sowie 0,01 bis 0,3 M.-% superabsorbierendes Polymer auf, bezogen auf die Gesamtmasse der zementhaltigen Schicht. Darüber hinaus wies die zementhaltige Schicht 2 vor dem Einbringen in den Untergrund 5 0,1 bis 5 M.-% Weichbranntkalk auf, bezogen auf die Gesamtmasse der zementhaltigen Schicht.

Die zementhaltige Schicht 2 gelangt direkt in Kontakt mit dem Untergrund 5 und kann dadurch Wasser aufnehmen. Auf diese Weise wird eine chemische Reaktion des Hartbranntkalks mit dem Wasser bewirkt, die eine Volumenvergrößerung der zementhaltigen Schicht 2 bewirkt. Dadurch wird der Gründungspfahl 1 mit dem Untergrund 5 weiter verspannt. Mit Hilfe des Weichbranntkalks konnte der trocknungs- und erhärtungsbedingte Schwund der zementhaltigen Schicht 2, der insbesondere innerhalb der ersten drei bis acht Tage auftritt, im Wesentlichen ausgeglichen werden.

Beim Einbringen des Gründungspfahls 1 in den Untergrund 5 war die zementhaltige Schicht 2 durch eine Schutzfolie aus einem biologisch abbaubaren Polymer verhüllt, die in Figur 1 aber schon abgebaut ist.

BEISPIELMISCHUNGEN DER ZEMENTHALTIGEN SCHICHT

Materialien

Z        Zement des Typs CEM I 42,5 R mit einem Na-Äquivalent von 1,54.

CHK    calcitischer Hartbranntkalk (Körnung 0,125/0,25, Überkornanteil maximal 15 M.-%, Unterkornanteil maximal 20 M.-%).

DHK    dolomitscher Hartbranntkalk (Korngruppe 0,125/0,25, Überkornanteil maximal 15 M.-%, Unterkornanteil maximal 20 M.-%).

SAP    Superabsorbierendes Polymer.

GG      Glasgranulat (Korngruppe 2/4, Überkornanteil maximal 15 M.-%, Unterkornanteil maximal 20 M.-%).

Mit den obigen Materialien wurden die in Tabelle 1 angegebenen Mischungen hergestellt. Angegebenen Mengen in Gewichtsprozent. Der w/z Wert ist der Wasser-Zement-Wert.

Tabelle 1: Mischungen

| Mischung | Z | CHK/DHK/GG | SAP | w/z |
|---|---|---|---|---|
| 1 | 98 | 2 (DHK, feinkörnig) | 0 | 0,5 |
| 2 | 98,9 | 1 (CHK) | 0,1 | 0,5 |
| 3 | 97,9 | 2 (CHK) | 0,1 | 0,5 |
| 4 | 97,9 | 2 (DHK) | 0,1 | 0,5 |
| 5 | 96,9 | 3 (DHK) | 0,1 | 0,5 |
| 6 | 60 | 40 (GG) | 0 | 0,5 |
| 7 | 50 | 50 (GG) | 0 | 0,5 |
| 8 | 59,99 | 40 (GG) | 0,1 | 0,5 |
| 9 | 49,99 | 50 (GG) | 0,1 | 0,5 |

Aus den Mischungen wurden Prismen mit den Abmessungen 160 mm x 40 mm x 40 mm hergestellt. Nach 24 Stunden wurden die Proben entschalt und wie unten beschrieben gelagert, wobei die Länge der Prismen regelmäßig mit einer geeichten Schieblehre gemessen wurde. Die Prismen aus den Mischungen 2 bis 5 enthielten zur genaueren Längenmessung zusätzlich Schwindzapfen.

Je drei Prismen aus der Mischung 1 wurden bei 40°C in Frischwasser gelagert. Je drei Prismen aus den Mischungen 2 bis 5 wurden in Seewasser (30 g Seesalz / L Wasser) bei 20°C gelagert. Aus den Mischungen 6 bis 9 wurden ebenfalls drei Prismen hergestellt, von denen jeweils eines in

1. Trinkwasser bei 20°C, und
2. Seewasser (30 g Seesalz / L Wasser) bei 20°C
3. Seewasser (30 g Seesalz / L Wasser) bei 40°C

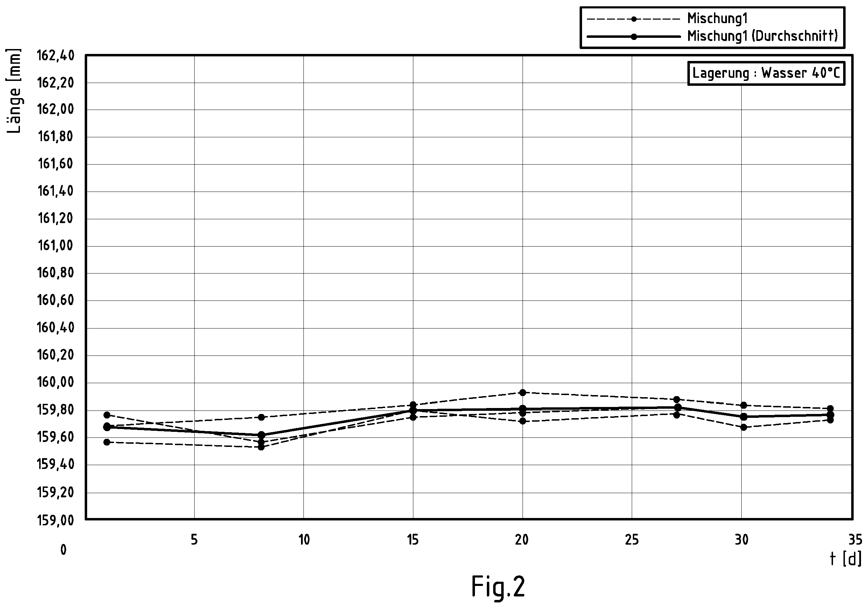

gelagert wurde. Die Längenänderungen der Prismen sind in den Figuren 2 bis 6 dargestellt. In der Legende der Figuren ist Trinkwasser jeweils mit Wasser abgekürzt.

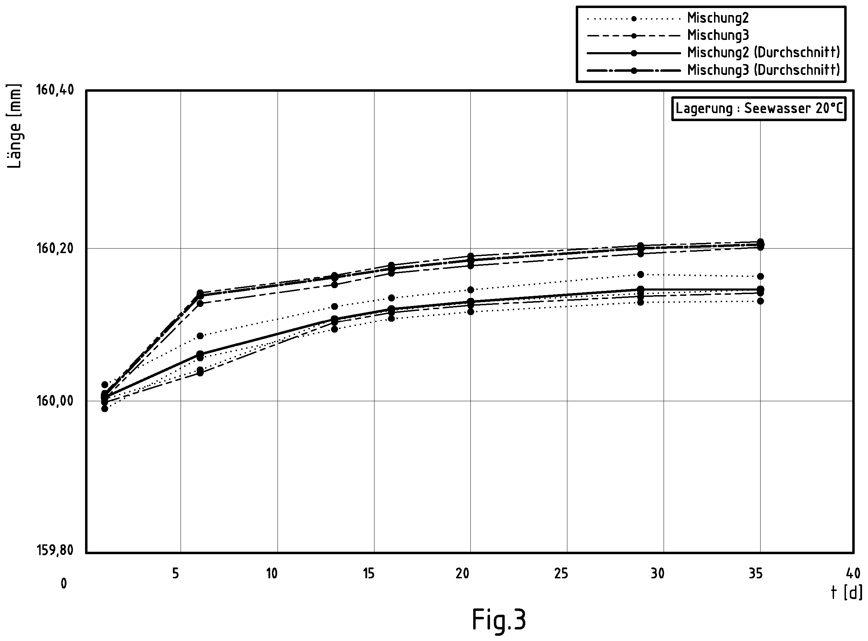

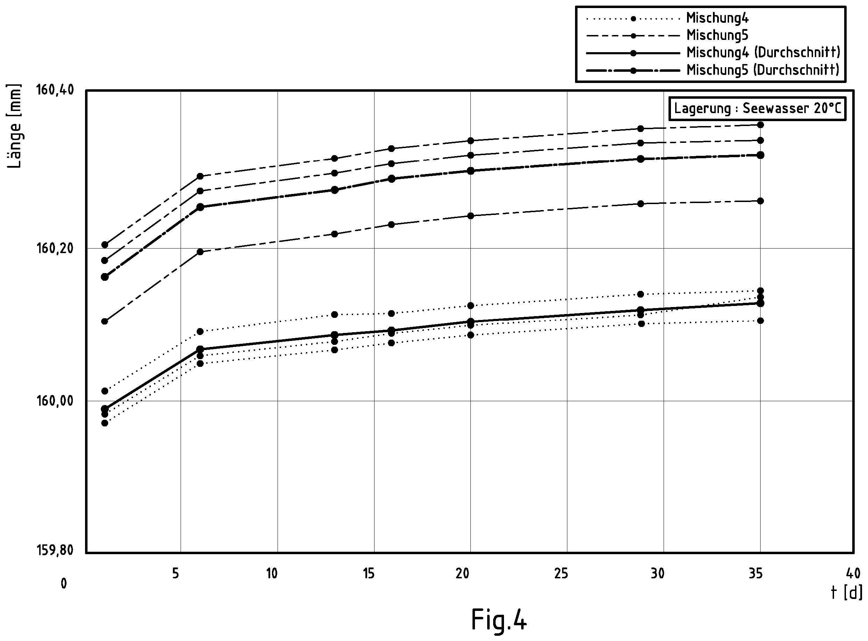

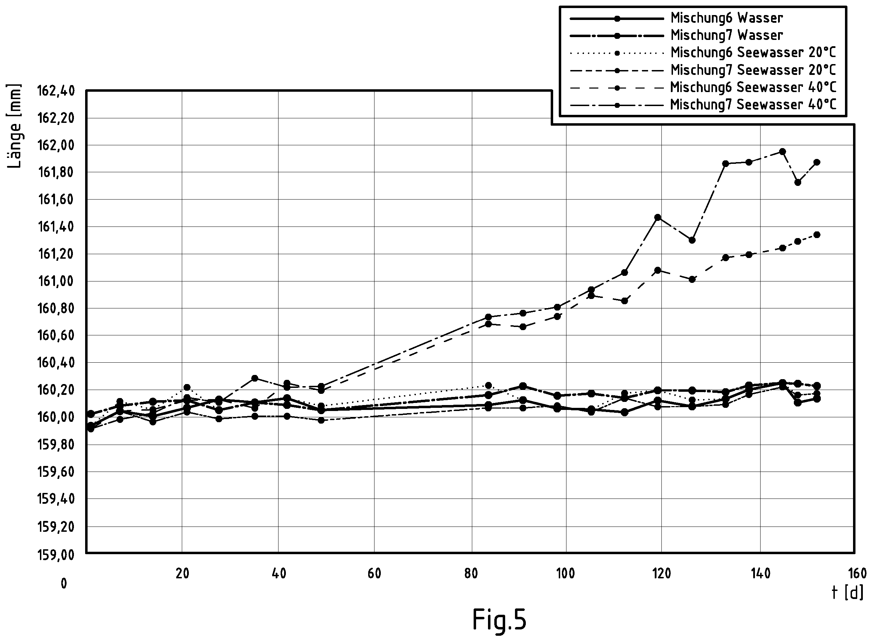

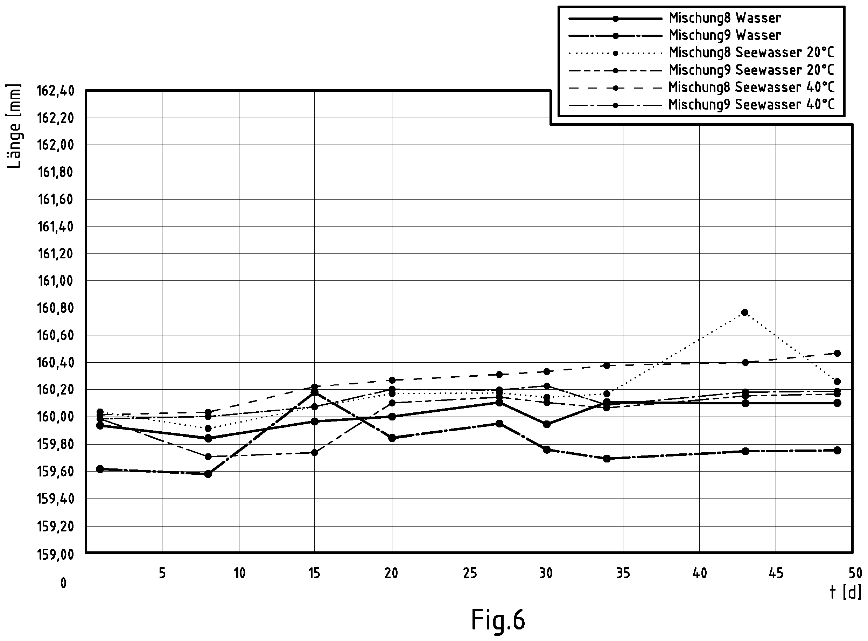

Wie aus Figur 2 folgt, vergrößert sich die Länge der Prismen aus der Mischung 1 über einen Zeitraum von 33 Tagen im Schnitt um etwa 0,1 mm und damit um etwa 0,6 Promille. Wie aus Figur 3 folgt, vergrößert sich die Länge der Prismen aus den Mischungen 2 und 3 über einen Zeitraum von 34 Tagen im Schnitt um bis zu etwa 0,2 mm und damit um bis zu etwa 1,3 Promille. Für die Mischungen 4 und 5 ergibt sich über einen Zeitraum von 34 Tagen ebenfalls eine deutliche Längenvergrößerung von im Schnitt mehr als etwa 0,1 mm und damit mehr als etwa 0,6 Promille (Figur 4). Aus Figur 5 folgt, dass für die Mischungen 6 und 7 bei den unterschiedlichen Lagerungsbedingungen über einen Zeitraum von 154 Tagen Längenvergrößerungen von etwa 0,2 mm entsprechend etwa 1,3 Promille (z.B. Trinkwasser bei 20°C) bis zu 1,9 mm entsprechend etwas 11,9 Promille (Seewasser bei 40°C) beobachtet wurden. Auch für die Mischungen 8 und 9 wurde über 48 Tage eine Längenvergrößerung von etwa 0,4 mm und damit etwa 2,5 Promille bei Lagerung in Seewasser bei 40°C beobachtet (Figur 6).

Somit können durch den Einsatz von kalktreibenden Inhaltsstoffen und alkalitreibenden Inhaltsstoffen, beispielsweise Hartbranntkalken oder Glasgranulaten, über einen langfristigen Zeitraum Längenvergrößerungen erreicht werden. Bei Gründungspfählen mit radial auf der Außenseite aufgebrachten Schichten können sich die Gründungspfähle mit Hilfe der Längenvergrößerung über ihre Einsatzdauer im Untergrund weiter verspannen. Aus den Experimenten ist ebenfalls ersichtlich, dass superabsorbierende Polymere sowohl bei Hartbranntkalken als auch bei Glasgranulaten unterstützend wirken.

Von Normprismen mit den Maßen 160 mm x 40 mm x 40 mm der Mischungen 2 bis 5 wurden zusätzlich die folgenden mechanischen Eigenschaften untersucht:

1. 3 Punkt Biegezugfestigkeit nach DIN EN 196-1:2016-11 nach 7 und 28 Tagen,
2. Prismendruckfestigkeit nach DIN EN 196-1:2016-11 nach 7 und 28 Tagen
3. Dynamischer Elastizitätsmodul nach DIN EN 12504-1:2019-09 nach 28 Tagen.

Die Normprismen wurden bis zur jeweiligen Prüfung in Seewasser (30 g Seesalz / L Wasser) bei 20°C gelagert. Die Ergebnisse der Messungen sind in der nachfolgenden Tabelle 2 zusammengestellt. Dabei sind die angegebenen Biegezugfestigkeiten jeweils Mittelwerte aus drei Messungen, die Druckfestigkeitswerte Mittelwerte aus 6 Messungen und der dynamische Elastizitätsmodul Mittelwerte aus je 3 Messungen.

Tabelle 2: Biegezugfestigkeiten (BZF) und Druckfestigkeiten (DF) sowie dynamischer E-Modul (DEM) nach 7 Tagen (7d) bzw. 28 Tagen (28d) bei Lagerung in Seewasser bei 20°C. Alle Werte sind in N/mm$^2$ angegeben.

| Probe | BZF, 7d | BZF, 28d | DF, 7d | DF, 28d | DEM, 28d |
|---|---|---|---|---|---|
| 2 | 5,3 | 5,8 | 29,0 | 35,1 | 19200 |
| 3 | 5,1 | 5,4 | 27,1 | 34,1 | 18300 |
| 4 | 5,0 | 5,6 | 30,0 | 34,5 | 18100 |
| 5 | 5,4 | 5,3 | 30,2 | 35,4 | 19000 |

Tabelle 2 zeigt, dass die Biegezugfestigkeit von 7 bis 28 Tagen im Wesentlichen konstant bleibt oder steigt und die Druckfestigkeit von 7 bis 28 Tagen ansteigt. Die Proben haben also durch die Längenvergrößerung keine beeinträchtigenden Gefügeschäden erlitten.

**Patentansprüche**

1. Gründungspfahl (1), insbesondere für Offshore-Bauwerke,

   mit einem Pfahlendabschnitt (6) zum Einbringen in einen Untergrund (5),
   mit einer am Pfahlendabschnitt (6) außenseitig angebrachten zementhaltigen Schicht (2),
   wobei die zementhaltigen Schicht (2) eine Oberfläche aufweist, die mit dem Untergrund (5) in Kontakt gelangen kann, und
   wobei die zementhaltige Schicht (2) mindestens einen volumenvergrößernden Inhaltsstoff enthält, wobei die Volumenvergrößerung durch eine chemische Reaktion hervorgerufen wird,
   wobei die zementhaltige Schicht untrennbar mit dem Pfahlendabschnitt verbunden ist.

2. Gründungspfahl (1) nach Anspruch 1, **dadurch gekennzeichnet, dass** die zementhaltige Schicht (2) mindestens 30 M.-% oder mindestens 70 M.-% Zement enthält, bezogen auf die Gesamtmasse der zementhaltigen Schicht (2).

3. Gründungspfahl (1) nach Anspruch 1 oder 2, **dadurch gekennzeichnet, dass** der mindestens eine volumenvergrößernde Inhaltsstoff ausgewählt ist aus der Gruppe bestehend aus Hartbranntkalk, Hartbranntdolomit, Glasgranulat, Glasperlen, amorphe Gesteinskörnungen, gestresste Gesteinskörnungen, Quarz, reaktives Gestein wie Grauwacke oder Opal, korrosives Metallpulver wie Eisenpulver, korrosive Metallspäne wie Eisenspäne und korrosive Metallfasern wie Stahlfasern.

4. Gründungspfahl (1) nach einem der vorstehenden Ansprüche, **dadurch gekennzeichnet, dass** die zementhaltige Schicht (2) ein NazO-Äquivalent von mehr als 1,1 M.-%, insbesondere mehr als 1,2 M.-%, aufweist.

5. Gründungspfahl (1) nach einem der vorstehenden Ansprüche, **dadurch gekennzeichnet, dass** die zementhaltige Schicht (2) ein wasserabsorbierendes Polymer, insbesondere ein superabsorbierendes Polymer, aufweist.

6. Gründungspfahl (1) nach einem der vorstehenden Ansprüche, **dadurch gekennzeichnet, dass** die zementhaltige Schicht (2) Weichbranntkalk enthält.

7. Gründungspfahl (1) nach einem der vorstehenden Ansprüche, **dadurch gekennzeichnet, dass** die zementhaltige Schicht (2) den Pfahlendabschnitt (6) über den gesamten Umfang unterbrochen oder ununterbrochen, insbesondere ununterbrochen, umgibt.

8. Gründungspfahl (1) nach einem der vorstehenden Ansprüche, **dadurch gekennzeichnet, dass** die zementhaltige Schicht (2) eine Dicke von 10 bis 100 mm, insbesondere 10 bis 80 mm oder 10 bis 50 mm aufweist.

9. Gründungspfahl (1) nach einem der vorstehenden Ansprüche, **dadurch gekennzeichnet, dass** die zementhaltige Schicht (2) eine Bewehrung, insbesondere aus Stahl, aufweist.

10. Gründungspfahl (1) nach einem der vorstehenden Ansprüche, **dadurch gekennzeichnet, dass** um die zementhaltige Schicht (2) herum eine Umhüllung angebracht ist, die eine Volumenvergrößerung der zementhaltigen Schicht (2) hemmt.

11. Gründungspfahl (1) nach einem der vorstehenden Ansprüche, **dadurch gekennzeichnet, dass** um die zementhaltige Schicht (2) herum eine Umhüllung angebracht ist, die eine Volumenvergrößerung der zementhaltigen Schicht (2) hemmt und wobei die Umhüllung selbst in Berührung mit Wasser langfristig volumenvergrößernde Eigenschaften hat.

12. Gründungspfahl (1) nach einem der vorstehenden Ansprüche, **dadurch gekennzeichnet, dass** um die zementhaltige Schicht (2) oder um die Umhüllung eine den Zutritt von Wasser unterbindende Schutzfolie angebracht ist.

13. Verfahren zur Herstellung eines Gründungspfahls (1) nach einem der Ansprüche 1 bis 12 mit einem Pfahlendabschnitt (6) zum Einbringen in einen Untergrund (5) und umfassend am Pfahlendabschnitt (6) eine zementhaltige Schicht (2), enthaltend die Schritte

    a. Bereitstellen eines rohrförmigen Grundkörpers des Gründungspfahls (1),
    b. Aufbringen auf den Pfahlendabschnitt (6) einer zementhaltigen, untrennbar mit dem Pfahlendabschnitt

**EP 4 092 196 B1**

verbundenen Mischung enthaltend mindestens einen volumenvergrößernden Inhaltsstoff zur Ausbildung der zementhaltigen Schicht (2).

14. Verfahren nach Anspruch 13, **dadurch gekennzeichnet, dass** in Schritt b. zunächst eine erste Lage der zementhaltigen Mischung aufgebracht und mindestens 24 Stunden, insbesondere mindestens 72 Stunden getrocknet wird, wobei die Dicke der ersten Lage mindestens 50%, vorzugsweise mindestens 75% der Dicke der zementhaltigen Schicht beträgt.

15. Verfahren nach einem der Ansprüche 13 oder 14, **dadurch gekennzeichnet, dass** der massenbezogene Anteil des Zugabewassers in der zementhaltigen Mischung mindestens 20 M.-% und höchstens 70 M.-%, insbesondere von 30 M.-% bis 60 M.-% beträgt, bezogen auf die Gesamtmasse der zementhaltigen Mischung, und/oder

dass der mindestens eine volumenvergrößernde Inhaltsstoff ausgewählt ist aus der Gruppe bestehend aus Hartbranntkalk, Hartbranntdolomit, Glasgranulat, Glasperlen, amorphe Gesteinskörnungen, gestresste Gesteinskörnungen, Quarz, reaktives Gestein wie Grauwacke oder Opal, korrosives Metallpulver wie Eisenpulver, korrosive Metallspäne wie Eisenspäne und korrosive Metallfasern wie Stahlfasern, und/oder
dass die zementhaltige Mischung ein $Na_2O$-Äquivalent von mehr als 1,1 M.-%, insbesondere mehr als 1,2 M.-%, aufweist, und/oder
dass die zementhaltige Mischung ein wasserabsorbierendes Polymer, insbesondere ein superabsorbierendes Polymer, aufweist, und/oder dass die zementhaltige Mischung Weichbranntkalk enthält, und/oder dass die zementhaltige Mischung den Pfahlendabschnitt (6) über den gesamten Umfang unterbrochen oder ununterbrochen, insbesondere ununterbrochen, umgibt.

16. Verwendung eines Gründungspfahls (1) nach einem der Ansprüche 1 bis 12 in einer Gründung für ein Offshore-Bauwerk, insbesondere eine Offshore-Windkraftanlage.

**Claims**

1. Foundation pile (1), in particular for offshore structures,

with a pile end section (6) for insertion into a subsoil (5),
with a cementitious layer (2) applied to the outside of the pile end section (6), wherein the cementitious layer (2) has a surface that can come into contact with the subsoil (5), and
wherein the cementitious layer (2) contains at least one volume-increasing ingredient, wherein the volume increase is caused by a chemical reaction, wherein the cementitious layer is inseparably connected to the pile end section.

2. Foundation pile (1) according to claim 1, **characterized in that** the cementitious layer (2) contains at least 30 mass% or at least 70 mass% cement, based on the total mass of the cementitious layer (2).

3. Foundation pile (1) according to claim 1 or 2, **characterized in that** the at least one volume-increasing ingredient is selected from the group consisting of quicklime, quick dolomite, glass granulate, glass beads, amorphous rock aggregates, stressed rock aggregates, quartz, reactive rock such as greywacke or opal, corrosive metal powder such as iron powder, corrosive metal chips such as iron chips, and corrosive metal fibers such as steel fibers.

4. Foundation pile (1) according to one of the preceding claims, **characterized in that** the cementitious layer (2) has a $Na_2O$ equivalent of more than 1.1 mass%, in particular more than 1.2 mass%.

5. Foundation pile (1) according to one of the preceding claims, **characterized in that** the cementitious layer (2) comprises a water-absorbing polymer, in particular a superabsorbent polymer.

6. Foundation pile (1) according to one of the preceding claims, **characterized in that** the cementitious layer (2) contains soft quicklime.

7. Foundation pile (1) according to one of the preceding claims, **characterized in that** the cementitious layer (2) surrounds the pile end section (6) over the entire circumference in a discontinuous or continuous, in particular continuous, manner.

8. Foundation pile (1) according to one of the preceding claims, **characterized in that** the cementitious layer (2) has a thickness of 10 to 100 mm, in particular 10 to 80 mm or 10 to 50 mm.

9. Foundation pile (1) according to one of the preceding claims, **characterized in that** the cementitious layer (2) has reinforcement, in particular made of steel.

10. Foundation pile (1) according to one of the preceding claims, **characterized in that** a casing is provided around the cementitious layer (2) which inhibits an increase in volume of the cementitious layer (2).

11. Foundation pile (1) according to one of the preceding claims, **characterized in that** a casing is provided around the cementitious layer (2) which inhibits an increase in volume of the cementitious layer (2) and wherein the casing itself has volume-increasing properties when in contact with water over a long period of time.

12. Foundation pile (1) according to one of the preceding claims, **characterized in that** a protective film preventing the ingress of water is provided around the cementitious layer (2) or around the casing.

13. Method for manufacturing a foundation pile (1) according to one of claims 1 to 12 with a pile end section (6) for insertion into a subsoil (5) and comprising a cementitious layer (2) on the pile end section (6), containing the steps of

    a. providing a tubular base body of the foundation pile (1),
    b. applying to the pile end section (6) a cementitious mixture inseparably bonded to the pile end section containing at least one volume-increasing ingredient for forming the cementitious layer (2).

14. Method according to claim 13, **characterized in that** in step b., a first layer of the cementitious mixture is first applied and dried for at least 24 hours, in particular at least 72 hours, wherein the thickness of the first layer is at least 50%, preferably at least 75% of the thickness of the cementitious layer.

15. Method according to one of claims 13 or 14, **characterized in that** the mass fraction of the added water in the cementitious mixture is at least 20 mass% and at most 70 mass%, in particular from 30 mass% to 60 mass%, based on the total mass of the cementitious mixture, and/or

    that the at least one volume-increasing ingredient is selected from the group consisting of quicklime, quick dolomite, glass granulate, glass beads, amorphous rock aggregates, stressed rock aggregates, quartz, reactive rock such as greywacke or opal, corrosive metal powder such as iron powder, corrosive metal chips such as iron chips and corrosive metal fibers such as steel fibers, and/or that the cementitious mixture has a $Na_2O$ equivalent of more than 1.1 mass%, in particular more than 1.2 mass%, and/or
    that the cementitious mixture comprises a water-absorbing polymer, in particular a superabsorbent polymer, and/or
    that the cementitious mixture contains soft quicklime, and/or
    that the cementitious mixture surrounds the pile end section (6) in a discontinuous or continuous, in particular continuous, manner over the entire circumference.

16. Use of a foundation pile (1) according to one of claims 1 to 12 in a foundation for an offshore structure, in particular an offshore wind turbine.

**Revendications**

1. Pieu de fondation (1), en particulier pour des constructions offshore,

    avec une partie d'extrémité de pieu (6) destinée à être enfoncée dans un sous-sol (5),
    avec une couche contenant du ciment (2) appliquée à l'extérieur sur la partie d'extrémité de pieu (6),
    la couche contenant du ciment (2) présentant une surface qui peut entrer en contact avec le sous-sol (5), et
    la couche contenant du ciment (2) contenant au moins un composant augmentant le volume, l'augmentation de volume étant provoquée par une réaction chimique, la couche contenant du ciment étant reliée de manière indissociable à la partie d'extrémité du pieu.

2. Pieu de fondation (1) selon la revendication 1, **caractérisé en ce que** la couche contenant du ciment (2) contient au moins 30 % en masse ou au moins 70 % en masse de ciment par rapport à la masse totale de la couche contenant du ciment (2).

3. Pieu de fondation (1) selon la revendication 1 ou 2, **caractérisé en ce que** ledit au moins un composant augmentant le volume est choisi parmi le groupe constitué de chaux vive, de dolomite vive, de granulés de verre, de perles de verre, de granulats amorphes, de granulats stressés, de quartz, de roches réactives telles que la grauwacke ou l'opale, de poudres métalliques corrosives telles que la poudre de fer, de copeaux métalliques corrosifs tels que les copeaux de fer et de fibres métalliques corrosives telles que les fibres d'acier.

4. Pieu de fondation (1) selon l'une des revendications précédentes, **caractérisé en ce que** la couche contenant du ciment (2) présente un équivalent $Na_2O$ supérieur à 1,1 % en masse, en particulier supérieur à 1,2 % en masse.

5. Pieu de fondation (1) selon l'une des revendications précédentes, **caractérisé en ce que** la couche contenant du ciment (2) présente un polymère absorbant l'eau, en particulier un polymère superabsorbant.

6. Pieu de fondation (1) selon l'une des revendications précédentes, **caractérisé en ce que** la couche contenant du ciment (2) contient de la chaux vive éteinte.

7. Pieu de fondation (1) selon l'une des revendications précédentes, **caractérisé en ce que** la couche contenant du ciment (2) entoure la partie d'extrémité du pieu (6) sur tout sa circonférence de manière discontinue ou continue, en particulier de manière continue.

8. Pieu de fondation (1) selon l'une des revendications précédentes, **caractérisé en ce que** la couche contenant du ciment (2) présente une épaisseur de 10 à 100 mm, en particulier de 10 à 80 mm ou de 10 à 50 mm.

9. Pieu de fondation (1) selon l'une des revendications précédentes, **caractérisé en ce que** la couche contenant du ciment (2) comporte une armature, en particulier en acier.

10. Pieu de fondation (1) selon l'une des revendications précédentes, **caractérisé en ce qu'**une enveloppe est disposée autour de la couche contenant du ciment (2), qui empêche une augmentation du volume de la couche contenant du ciment (2).

11. Pieu de fondation (1) selon l'une des revendications précédentes, **caractérisé en ce qu'**une enveloppe est disposée autour de la couche contenant du ciment (2), qui empêche une augmentation du volume de la couche contenant du ciment (2), l'enveloppe elle-même présentant des propriétés d'augmentation de volume au contact prolongé avec l'eau.

12. Pieu de fondation (1) selon l'une des revendications précédentes, **caractérisé en ce qu'**une feuille protectrice empêchant l'accès de l'eau est disposée autour de la couche contenant de ciment (2) ou autour de l'enveloppe.

13. Procédé de fabrication d'un pieu de fondation (1) selon l'une des revendications 1 à 12, avec une partie d'extrémité de pieu (6) destinée à être enfoncée dans un sous-sol (5) et comprenant, sur la partie d'extrémité de pieu (6), une couche contenant du ciment (2), comprenant les étapes suivantes

   a. mise à disposition d'un corps de base tubulaire du pieu de fondation (1),
   b. application sur la partie d'extrémité du pieu (6) d'un mélange contenant du ciment, indissociable de la partie d'extrémité du pieu et contenant au moins un composant augmentant le volume pour former la couche contenant du ciment (2).

14. Procédé selon la revendication 13, **caractérisé en ce que**, à l'étape b., une première couche du mélange contenant du ciment est appliquée d'abord et est laissée sécher pendant au moins 24 heures, en particulier au moins 72 heures, l'épaisseur de la première couche étant d'au moins 50 %, de préférence d'au moins 75 % de l'épaisseur de la couche contenant du ciment.

15. Procédé selon l'une des revendications 13 ou 14, **caractérisé en ce que** la proportion en masse de l'eau ajoutée dans le mélange contenant du ciment est d'au moins 20 % en masse et d'au plus 70 % en masse, en particulier de 30 % en masse à 60 % en masse, par rapport à la masse totale du mélange contenant du ciment, et/ou

que le au moins un composant augmentant le volume est choisi dans le groupe constitué par de chaux vive, de dolomite vive, de granulés de verre, de perles de verre, de granulats amorphes, de granulats stressés, de quartz, de roches réactives telles que la grauwacke ou l'opale, de poudres métalliques corrosives telles que la poudre de fer, de copeaux métalliques corrosifs tels que les copeaux de fer et de fibres métalliques corrosives telles que les fibres d'acier, et/ou

que le mélange contenant du ciment présente un équivalent $Na_2O$ supérieur à 1,1 % en masse, en particulier supérieur à 1,2 % en masse, et/ou

que le mélange contenant du ciment contient un polymère absorbant l'eau, en particulier un polymère superabsorbant, et/ou

que le mélange contenant du ciment contient de la chaux vive éteinte, et/ou

que le mélange contenant du ciment entoure la partie d'extrémité du pieu (6) sur tout sa circonférence de manière discontinue ou continue, en particulier de manière continue.

16. Utilisation d'un pieu de fondation (1) selon l'une des revendications 1 à 12 dans une fondation pour une construction offshore, en particulier une éolienne offshore.

Fig.1

Fig.2

EP 4 092 196 B1

Fig.3

Fig.4

EP 4 092 196 B1

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017121137 A1
- EP 2851471 A2
- WO 2020207651 A1
- WO 2020211993 A1
- DE 102017121037 A1

**In der Beschreibung aufgeführte Nicht-Patentliteratur**

- **THOMAS MALLON**. Bauchemie. Vogel Fachbuch, 2005, 118-121